(19) Europäisches Patentamt
European Patent Office
Office européen des brevets

(11) Publication number: **0 255 181**
**A1**

(12) **EUROPEAN PATENT APPLICATION**

(21) Application number: **87201440.2**

(22) Date of filing: **27.07.87**

(51) Int. Cl.[4]: **C08F 2/44**, C08F 10/00, C08F 4/60

(30) Priority: **30.07.86 IT 2131286**

(43) Date of publication of application: **03.02.88 Bulletin 88/05**

(84) Designated Contracting States: **AT BE CH DE ES FR GB GR LI LU NL SE**

(71) Applicant: **ENICHEM SINTESI S.p.A.**
**Via Ruggero Settimo 55**
**I-90139 Palermo(IT)**

(72) Inventor: **Costanzi, Silvestro**
**Via Dei Mille 26**
**I-20098 San Giuliano Milanese Milan(IT)**
Inventor: **Gussoni, Damiano**
**Via Inama 7**
**I-20133 Milan(IT)**
Inventor: **Pallini, Luciano**
**Via V. Bottego 3**
**I-43045 Fornovo Taro Parma(IT)**

(74) Representative: **Roggero, Sergio et al**
**Ing. Barzanò & Zanardo Milano S.p.A. Via Borgonuovo 10**
**I-20121 Milano(IT)**

(54) **Process of (co)polymerization of alpha-olefins in the presence of stabilizers.**

(57) Stabilizers for organic polymers, consisting of one or more compounds of the classis of the sterically hindered amines (HALS) are directly added to the reaction mixture during the (co)polymerization of the α-olefins or of their mixtures with other unsaturated monomers.

The so-obtained polymeric compositions result perfectly stabilized and show a thermo-and photo-oxidative resistance higher than that of the same polymeric compositions to which the same stabilizers are added by a traditional route.

EP 0 255 181 A1

"PROCESS OF (CO)POLYMERIZATION OF $\alpha$-OLEFINS IN THE PRESENCE OF STABILIZERS. "

The present invention relates to a new process for the homo-or copolymerization of $\alpha$-olefins, wherein suitable stabilizer compounds, belonging to the family of the sterically hindered amines (HALS) are directly added to the reaction mixture during the course of the polymerization.

It is known that the organic polymers, such as, e.g., the polyolefins, undergo degradation with time, due to the exposure to the atmospheric agents, and, in particular, to the U.V. light, as well as thermooxidative degradations during their processing and transformation processes.

This degradation appears as a decrease in the physical characteristics of the polymers, such as, e.g., a decrease in ultimate tensile strength and a decrease in flexibility, which are accompanied by a change in melt flow index, or in melt flow time of the same polymers, or by a change in the appearance of the manufactured article.

For the purpose of counteracting such a degradation, it is customary in the art to introduce into the organic polymers small amounts of antioxidant compounds, generally constituted by sterically hindered phenols, sterically hindered amines, benzotriazoles, as well as phosphorus-containing compounds, and their various mixtures.

The difficulties which are met in the stabilization of the organic polymers derive essentially from phenomena of release of the stabilizer by the polymer.

These phenomena occur always, to a greater or lesser extent, when the traditional stabilizer compounds are used, but, above all, they can be boosted by the modalities according to which the same antioxidants are added to the polymer.

Typical is the case of the suspension-produced polyolefins (polypropylene, polyethylene), wherein the stabilizer compound is added to the polymer at the end of the polymerization reaction, and before the extrusion and pelletizing steps.

In these cases, the stabilizer product is distributed on the outer surface of polymer particles. A better homogenization is generally obtained in these cases during the subsequent thermal treatments, such as, e.g., the extrusion in the molten state, or the processing by the manufacturer of finished or semi-finished articles, for producing such articles.

These thermal treatments are generally extremely detrimental for not-completely stabilized polymers, such as those obtained from the above-mentioned polymeric suspensions, and that, above all in case of propylene, whose instability to the thermal treatments is well-known.

Extremely dramatic is the case of polyolefins, in particular polypropylene, obtained with organo-metallic catalytic systems capable of supplying polymers in the form of granules or pellets, or anyway of particles having rather large dimensions, and which, should it be possible to adequately stabilize them, could be sold avoiding the steps of extrusion and pelletizing.

One should furthermore remember that the operations of milling, blending and re-compounding (extrusion and pelletizing) are generally very expensive, besides being detrimental for the properties of the polymers according to what previously said.

The present Applicant has now surprisingly found that the above problems can be overcome by using, as stabilizer agents, some compounds belonging to the class of the sterically hindered amines (HALS), and adding these compounds during the step of polymerization. In fact, these stabilizer agents have shown to be substantially chemically inert towards the catalytic systems generally used in the synthesis of the polyolefins, and can be hence directly added to the polymerization reactor.

By operating in the above shown way, an absorption of the stabilizer by the growing polymer granule is obtained, with said stabilizer being incorporated in a homogeneous and uniform way inside the particles of the produced polymer.

The advantages achieved by means of the new process wherein the stabilizer agent is added to the polymer during the step of polymerization are many: first of all, as it shall be exhaustively shown in the experimental part, that of supplying polymers which are considerably more stable than those to which the same amounts of the same antioxidants are added a posteriori, or by any other systems.

The higher stability is obviously due to the fact that the stabilizer agent added during the synthesis is an integrant part of the polymer, and results to be more evenly distributed throughout the same, and this is confirmed by the fact that the normal operations of post-treatment of the polymer, such as the washing to eliminate the catalytic residues, do not modify to a significant extent the concentration thereof inside said polymer.

Significant financial advantages which can be accomplished by means of the new method derive from the possible elimination of expensive equipment, such as the equipment for extrusion, milling and blending with the antioxidant powder, and no longer necessary due to such reasons as previously stated.

In front of the above, no contraindications to the use of the method claimed in the present patent application have been found.

In fact, the stabilizers used do not interfere with the catalyst, and do not modify the main characteristics of the polymers, such as, e.g., their molecular weights, and molecular weight distribution, their viscosity, their melting points, and so forth.

The stabilizer agents belonging to the class of the sterically hindered amines used in the process according to the present invention are furthermore compatible with most commercial antioxidants, which, if desired, can be hence later on added, to the end polymer.

The sterically hindered amines, besides being efficacious antioxidants, and acting as radical scavengers, are powerful stabilizers to light, and, in particular, to U.V. light.

The photo-stabilizers are chemical additives which are essential in order to secure a long life to the articles manufactured from the plastic materials exposed to U.V. light, in that they delay the photo-degradation phenomena.

Therefore, the object of the present patent application is a process of polymerization of α-olefins, in particular ethylene and propylene, or mixtures thereof with other unsaturated monomers, wherein a stabilizer agent, which is constituted by one or more derivatives of tetra-alkyl-morpholine and of tetra-alkyl-pyrrolidine, respectively containing the groups (I) and (II):

(Alk = alkyl)

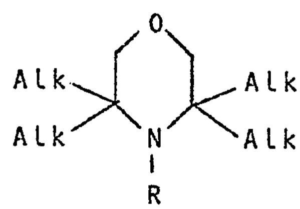

(I)

and

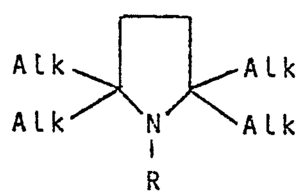

(II)

or by one or more derivatives of tetra-alkyl-piperidine containing the group (III)

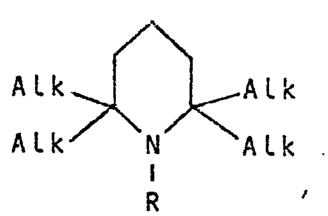

(III)

and substituted in their 4-position with a paraffinic polymeric chain of with a silyl-alkoxy group, is directly added to the reaction mixture during the same polymerization.

By the term "derivatives of tetra-alkyl-pyrrolidine", also those compounds are meant which have a different nomenclature, but which contain in their structure at least a tetra-alkyl-pyrrolidinic group (II), as, in particular, the dihydro-pyrrole-pyridinic derivatives, which have the general structure (IV)

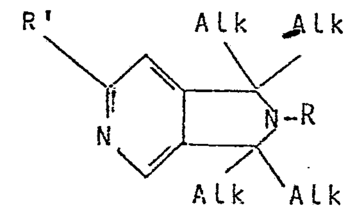

(IV)

the cyclo-octatrienic derivatives which have the structure (V)

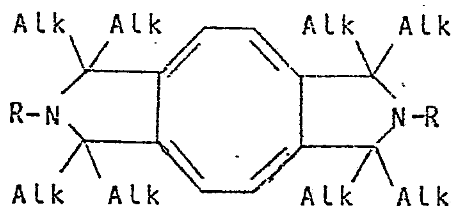

(V)

and the hexahydro-4,7-methane-1H-isoindol-8-onic derivatives (VI)

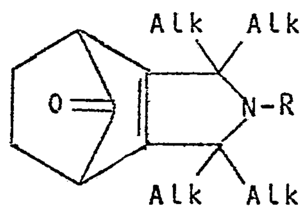

(VI)

with all of them being variously substituted.

More particularly, derivatives of tetra-alkyl-morpholine well usable in the process of the present invention are, e.g., those disclosed in published European patent application No. 155,055 which have, besides the tetra-methyl-substitution in their 3-and 5-positions, various substituents on their 2-position and/or 4-position, or the silylated derivatives, as disclosed, e.g., in European Patent Application Publication No. 0162524.

Pyrrolidinic derivatives useful as polymeric stabilizers, and advantageously usable in the process of the present invention are disclosed, e.g., in U.S. Patents Nos. 4.325.864 and 4.346.188, which relate to some penta-alkyl-substituted compounds bearing an acyl-oxy-alkylic group in their 1-position or 3-position respectively; in Italian Patent Application No. 21 352 A/84, which claims tri-cyclic compounds wherein two tetra-alkyl-pyrrolidinic rings are linked with each other by means of two ethene-di-ylidenic radicals (=CH-CH=), which connect the 3-and 4-positions with each other, forming a cyclo-octa-tetraene, and in European Pat. Appln. Publ. No. 0092288 and Italian Patent Appln. N. 21 822 A/85, which disclose condensation derivatives of the pyrrolidinic ring on a pyridine, to yield a 1,3-di-hydropyrrole-[3,4-c]-pyridine, which can be variously substituted or be bonded, through a polymethylene chain, to an aminic nitrogen of a 2,4,6-triamino-1,3,5-triazine, and still in italian Patent Application No. 21 210 A/85, which claims derivatives of 1,1,3,3-tetra-alkyl-2,3,4,5,6,7-hexahydro-4,7-methane-1H-isoindol-8-one, in whose structure, as already mentioned, the tetra-alkyl-pyrrolidinic ring is always present; furthermore, well-usable silylated derivatives of penta-alkyl-pyrrolidine are disclosed in European Patent Application Publication No. 0162524.

Tetra-alkyl-piperidinic derivatives bearing, in their 4-position, a paraffinic polymeric chain are disclosed in European Patent APplication No. 87201029.3, and tetra-alkyl-piperidinic derivatives bearing in their 4-position a silyl-alkoxy group are disclosed in European Patent Application Publication No. 0162524.

In order to avoid to excessively and uselessly overcharging the text of the present patent application, the contents of the above patents and patent Applns, both their part relating to a detailed definition of the compound classes, and their part relating to the methods of preparation of such compounds, are herein incorporated by reference.

Some of the compounds usable in the process of the present invention are commercial products; they are hence easily obtainable from the market.

The olefinic monomers which can be well polymerized and copolymerized according to the process of the present invention, in the presence of a stabilizer agent, are, e.g., ethylene, propylene, 1-butene, 4-methyl-1-pentene, 2-methyl-1-pentene, 1-pentene, 3-methyl-1-butene, 1-hexene, 1-octene, 2-ethyl-1-hexene, styrene, and so forth.

The stabilized polyolefins which are within the scope of the claims of the present invention are hence all those polyolefins which derive from the polymerization and co-polymerization according to the process of the present invention of the above-indicated monomers, as well as the products obtained from the mechanical blending of such polyolefins.

The process of polymerization of the α-olefins in the presence of a stabilizer agent according to the present invention can be carried out according to any of the most commonly used polymerization procedures, i.e., as a dispersion in an inert solvent, or as a dispersion in the same monomer, which, under the saturation pressure, is liquid.

When, according to the most advantagoeus method from an industrial viewpoint, the polymerization is carried out in the presence of an inert solvent, this shall be suitably selected from the aliphatic hydrocarbons, such as n-hexane, n-pentane, n-heptane, n-octane, iso-pentane, and so forth, the cyclic hydrocarbons, such as cyclohexane and cyclooctane, and the aromatic hydrocarbons, such as benzene or toluene.

The temperature and pressure conditions, under which the polymerization is to be carried out in the presence of the antioxidant, are those usable in the conventional polymerization processes. For example, the polymerization in the presence of an inert solvent can be advantageously carried out at a temperature comprised within the range of from 0 to 120°C, preferably of from 20 to 100°C, and under pressures comprised within the range of from the atmospheric value to 15 atmospheres, and preferably of from 1 to 10 atmospheres. If desired, molecular weight control agents can be used, as those skilled in the art know very well.

As relates to the catalysts usable in the process of the invention, these are the catalysts normally used in the synthesis of the polyolefins, and, in particular, those catalysts constituted by a compound of a transition metal of one of Groups IVA-VIII of the Periodic Table, e.g., titanium, vanadium, chrome, zirconium, together with an organic compound of a metal of one of Groups I-III (catalysts of Ziegler-Natta type) and the catalysts on the basis of metal oxides.

The classic example of a Ziegler-Natta catalytic system, which is also the catalytic system most widely used in the polymerization of the olefins, is constituted by an organic compound of aluminum, e.g., triethyl-aluminum, tri-isobutyl-aluminum, di-ethyl-aluminum chloride, isobutyl-aluminum dichloride, and so forth, and by titanium chlorides; in the preferred form, catalysts are used, in which the titanium chloride is reacted with a magnesium compound (magnesium oxide, hydroxide, chloride, alkoxides, or carboxylates), and, if desired, in the presence of an electron donor; this is then combined with an organic aluminum compound, as above seen.

As relates, on the contrary, to the catalysts based on metal oxides, the most used are the oxides of vanadium, molibdenum and tungsten, supported on alumina, or on another inert oxide, activated by reduction with hydrogen, and chrome oxide on silica-alumina, activated by oxidation in air at high temperatures. However, from the patent literature, as well as from the general technical literature, other types of catalytic systems for the high-yield polymerization of olefins are known, and all of them can be used as well in the process of the invention. The addition of the stabilizer compound to the reaction mixture can be carried out at any time during the polymerization, from the beginning of the true polymerization step, up to the step of quenching of the catalyst used.

The amounts of antioxidant which are added to the reaction mixture are strictly depending on the polymer yields, on the polymer amount in the suspension or solution which leaves the reactor, and on the amount of stabilizer agent desired in the same polymer. The desired amount of stabilizer compound desired in the polyolefins produced is generally comprised within the range of from 0.005 to 1% by weight, and preferably of from 0.01 to 0.5%.

The amount of stabilizer compound to be used in the process of the invention in order to obtain a polymer containing the desired percentage of stabilizer compound, can be easily computed for each polymerization, if the percentage of solvent contained in the wet polymer outcoming from said polymerization is known, and then suitably adjusting the concentration of the stabilizer compound in the reaction dispersant.

The following examples are furthermore illustrative of the process of the present invention, but they should not be understood as being limitative of the scope of said invention.

Example 1

High-Density Polymerization of Ethylene with High-Yield Catalysts

To an autoclave of 5 litres of capacity, equipped with a magnetic anchor stirrer, thermometer and pressure gauge, 2 litres (1,360 g) of anhydrous and de-aerated heptane, and 8 mmol of aluminum-tri-isobutyl are charged in the absence of air and moisture.

The temperature is increased to 85°C, then 2 kg/cm$^2$ of $H_2$, 50 ml of a heptanic suspension containing 12 mg of a catalyst for the polymerization of $\alpha$-olefins, obtained by reacting $TiCl_4$ with the product of the spray-drying of an ethanolic solution of $MgCl_2$ -as disclosed in U.S. patent No. 4,377,491 - and finally ethylene, are added, in the order mentioned, until a total pressure of 6 kg/cm$^2$ is reached.

Ethylene is continuously fed to the autoclave for approximately 2 hours, with pressure, temperature and stirring being kept constant.

At the end of the polymerization, 10 ml of ethyl alcohol is added, the reaction mixture is then cooled to room temperature and the autoclave is vented.

The contents of the autoclave are then discharged on a filter, and the solid retained by the filter is weighed (265 g) and is then dried in an oven at 60°C and under 10 $mm_{Hg}$ for 2 hours.

At the end of the operation, 192 g is obtained of a dry polymer, having the following characteristics:

-$MFI_{(2.16)}$ = 1.8 g/10 minutes;

-Shear sensitivity ($MFI_{(21.6}/MFI_{2.16)}$ = 32.

Example 2

Polyethylene Containing UV-1 Added during the Polymerization Step

The reaction is carried out as disclosed in the preceding Example, with the following modification:

-when charging the autoclave, 8 mmol of aluminum-triisobutyl and 3 g of UV-1 dissolved in 50 ml of heptane are added.

This experimental additive is a siloxanic polymer corresponding to the formula:

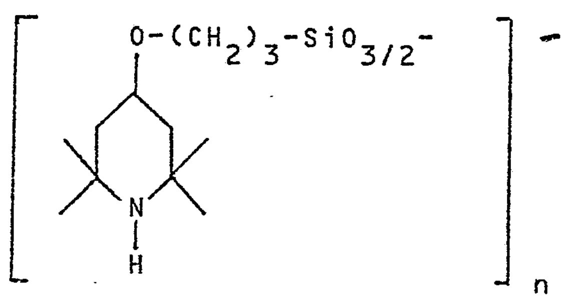

UV-1

(M.W. 7,200)

After the end of the operations of recovery, 100 g is obtained of a dry polymer having an $MFI_{2.16}$ of 5 g/10 minutes.

Example 3

Polyethylene Containing UV-2 Added During the Polymerization Step

The reaction is carried out as reported in the preceding Example, using, in place of UV-1, the following product:

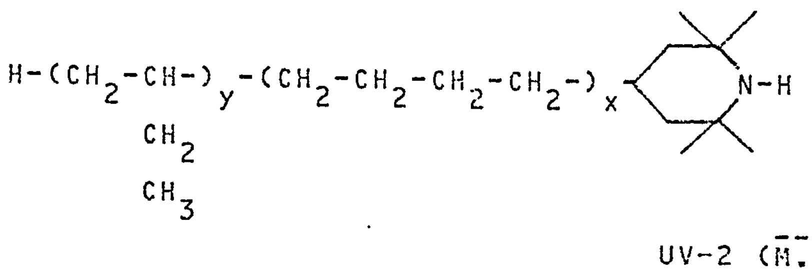

UV-2 ($\overline{M.W.}$ 925)

After the end of the operations of recovery, 115 g is obtained of a dry polymer, having an $MFI_{2.16}$ = 4.8 g/10 minutes.
Shear sensitivity = MFI $_{2.16}$/$MFI_{21.6}$ = 30.

A portion of the so-obtained polyethylene was submitted to an extraction in soxhlet, using $CH_2Cl_2$ as the solvent, in order to verify the amount of UV-2 contained in the polymer.

After the extraction, the solvent is removed and the residue is analyzed qualitatively and quantitatively.

The amount of UV-2 present in the residue is, then referred to 100 g of obtained polymer.

The original polymer contains 0.1% of UV-2.

Example 4

Polyethylene Containing UV-1 Added During the End Step of the Polymerization Process

The reaction is carried out according to as reported in Example 1 and furthermore, during the step of catalyst quenching, 20 ml of ethyl alcohol containing 3 g of UV-1 additive, is added.

At the end of the recovery operation, 192 g is obtained of a dry polymer, containing about 0.08% of UV-1 additive, having the following characteristics:
-$MFI_{2.16}$ = 1.6 g/10 minutes;
-$MFI_{21.6}$/MFI $_{2.16}$ = 34.

Example 5

Polyethylene Containing UV-2 Added During the End Step of the Synthesis Process

The reaction is carried out according to as reported in preceding Example 4, using the product UV-2 in place of the experimental additive UV-1.

After the usual recovery operations, 200 g is obtained of a dry product, having
-$MFI_{2.16}$ = 2.1 g/10 minutes.

.The polymer contains 0.12% of additive, determined as reported in Example 3.

Example 6

Preparation of Polyethylene with Added UV-1

10 g of polymer obtained as disclosed in Example 1 is suspended in 100 ml of hexane; to this suspension, 10 ml of hexane containing 0.1 g of UV-1 additive is added.

The mixture is stirred for 15 minutes at room temperature, the solvent is then distilled off, firstly under atmospheric pressure, then under a pressure of 20 $mm_{Hg}$.

To the so-obtained powder, a further 90 g of polymer, obtained as disclosed in Example 1, is added, and the resulting powder is blended inside a dry-blend for 1 hour.

Example 7

Preparation of Polyethylene with Added UV-2

The same preparation of Example 6 is repeated, using the product UV-2 in place of antioxidant UV-1.

Example 8

The polymers obtained as disclosed in preceding Examples 1-7 were submitted to compression moulding, in order to obtain a slab of 1.5 mm of thickness.

To perform the compression moulding, a compression press of CARVER type was used, under the following conditions:

-T(°C) = 190
-2 minutes of pre-heating
-3 minutes of compression under a pressure P = 1,400 kg/cm$^2$
-cooling in water at 15°C.

The so-obtained slabs were submitted to accelerated ageing on a UV-CON equipment, manufactured by ATLAS, with alternating cycles of irradiation with fluorescent lamps, rich in U.V. light, at a wavelength comprised within the range of from 280 to 350 nm, and of condensation in the dark, at controlled temperatures.

The conditions used in these tests are the following:

-Temperature of the black panel = 60°C
-Relative humidity = 50%

After various time periods of UV-CON exposure, the yellow indexes are measured and, finally, the irradiation time necessary to reach the loss of flexibility is determined.

The results of these tests are reported in following Table 1.

Table I

| Compound of Example No. | Yellow Index 0 (hours) | 500 (h) | 750 (h) | 1,000 (h) | Times of Embrittlement (hours) in UV-CON |
|---|---|---|---|---|---|
| 1 | 2.1 | 7.40 | 18.4 | n.d. | 800 |
| 2 | 1.5 | 4.2 | 6.7 | 12.1 | 1,200 |
| 3 | 1.4 | 2 | 4.5 | 6.5 | 1,800 |
| 4 | 1.5 | 3.2 | 4.7 | 8 | 1,600 |
| 5 | 1.5 | 3.7 | 5.1 | 9.1 | 1,400 |
| 6 | 1.3 | 2.1 | 5.7 | 15.1 | 1,200 |
| 7 | 1.5 | 3.1 | 5.3 | 13.3 | 1,100 |

Example 9

Preparation of Ethylene-Butene-1 Copolymer

To an autoclave of 5 litres of capacity, equipped with a magnetic anchor stirrer, thermometer and pressure gauge, 2 litres (1,120 g) of anhydrous and de-aerated isobutane, and 8 mmol of aluminum-tri-isobutyl are charged in the absence of air and moisture.

The temperature is increased to 100°C, then 2 kg/cm² of $H_2$, 50 ml of an isobutanic suspension containing 12 mg of a catalyst for the polymerization of α-olefins, obtained as disclosed in Example 1, and finally a stream consisting of 1-butene and ethylene in 2/1 molar ratio are added, in the order mentioned, until a total pressure of 17 kg/cm² is reached.

The mixture of 1-butene and ethylene is continuously fed to the autoclave for approximately 3 hours, with pressure, temperature and stirring being kept constant.

At the end of the polymerization, 15 ml of ethyl alcohol is added, the reaction mixture is cooled to room temperature, the autoclave is vented, and the normal operations of recovery of the polymer are carried out.

After drying the polymer in oven at 60°C, for 2 hours under 20 $mm_{Hg}$, 220 g is obtained of a product having an $MFI_{2.16}$ = 6.

Example 10

Polymerization of Ethylene Butene-1 Copolymer in the Presence of an Experimental Stabilizer UV-3

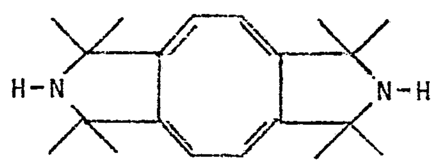

The experience is repeated as disclosed in preceding Example 9, but charging, together with 8 mmol of aluminum-triisobutyl, also 3 g of UV-3 product.

After the end of the operation, 216 g is obtained of a dry polymer, having an $MFI_{2.16}$ = 4 g/10 minutes.

A portion of so-obtained polymer was submitted to an extraction in soxhlet, using $CH_2Cl_2$ as the extraction solvent. The solution was analysed qualitatively and quantitatively, in order to measure the amount of UV-3 additive contained in the polymer obtained: it contained 0.12% of (UV-3) polymer.

Example 11

Polymerization of Ethylene Butene-1 Copolymer Containing UV-3 Added During the End Step of the Synthesis Process

The reaction is carried out according to as reported in preceding Example 9, but, during the step of catalyst quenching, 20 ml of ethyl alcohol containing 3 g of UV-3 additive were added.

At the end of the normal recovery operation, 222 g is obtained of a dry polymer, with an $MFI_{2.16}$ = 6.3 g/10 minutes.

Example 12

Polymerization of Ethylene Butene-1 Copolymer Containing UV-4 Added During the Polymerization

The reaction is carried out according to as reported in preceding Example 10, but using, in place of UV-3, the following product:

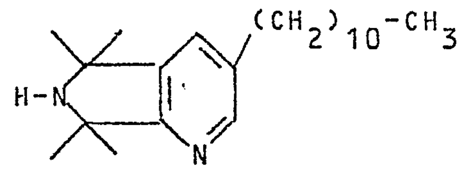

UV-4 (M.W. 330)

Example 13

Example analogous to preceding Example 11, using UV-1 during the step of catalyst quenching.

Example 14

Addition of UV-1 Additive to LLDPE Powder Prepared as Reported in Example 9

To a flask of 100 ml of capacity,50 ml of hexane, 10 g of polymer as prepared in Example 9 and 0.1 g of UV-1 are added.

The mixture is stirred for approximately 30 minutes, and the solvent is removed, firstly at room temperature, and then under vacuum at 60°C (20 $mm_{Hg}$).

The so-obtained mixture is added to a further 90 g of polymer, and is stirred at room temperature for 2 hours inside a laboratory dry-blend.

Example 15

Addition of UV-1 Additive to LLDPE Powder Prepared as Reported in Example 9

The addition is carried out as disclosed in Example 14, but operating with a double amount (0.2 g) of UV-1.

The end polymer contains 0.2% by weight of UV-1.

Example 16

Addition of UV-1 Additive to LLDPE Powder Prepared as Reported in Example 9

The addition is carried out as disclosed in Example 14, but using UV-3 in place of UV-1.

The end polymer contains 0.1% by weight of UV-3.

Example 17

Addition of UV-1 Additive to LLDPE Powder Prepared as Reported in Example 9

The addition is carried out as disclosed in Example 14, but using UV-4, in an amount of 0.1% by weight, relatively to the polymer, in place of UV-1.

Example 18

The polymers obtained as disclosed in Examples 9-17 were submitted to compression moulding, to obtain a film of 60 µl of thickness.

For this moulding, a laboratory-size press of CARVER type was used with the following operating modalities:

-T(°C) = 190

-Pre-heating = 2 minutes

-Moulding = 3 minutes under a pressure P = 1,400 kg/cm$^2$.

The so-obtained films were submitted to irradiation by U.V. light, using an UV-CON equipment (ATLAS) under the following conditions:

-Black Panel Temperature = 60°C

-Relative Humidity = 50%

On the films, at various ageing times, the formation of carbonylic compounds was evaluated, by evidencing it by I.R. spectroscopy, and reported as the "carbonyl index", according to the following formula:

$$\text{C.I. (Carbonyl Index)} = \frac{A_t - A_o}{D} \times 100$$

wherein:

-$A_o$ = Initial intensity of absorption at 1,710 cm$^{-1}$;

-$A_t$ = Intensity of absorption after the time t of exposure in UV-CON, and determined at 1,710 cm$^{-1}$;

-D = Film thickness (µl).

The following Table II reports the exposure times in UV-CON, necessary for obtaining a percent change in carbonyl index equal to 10.

TABLE II

| Compound of Example No. | Exposure Time (hours) |
|---|---|
| 9 | 150 |
| 10 | 1,500 |
| 11 | 1,200 |
| 12 | 1,600 |
| 13 | 1,300 |
| 14 | 900 |
| 15 | 1,600 |
| 16 | 1,000 |
| 17 | 950 |

From Table II one can observe that:

a) The addition of a stabilizer during the polymerization (Examples 10 and 12) yields products which supply a better performance than the products obtained by adding the same percentages of stabilizer compound during the step of catalyst quenching.

b) The addition of the stabilizer during the end step of the synthesis process (Examples 11 and 13) is more efficacious than the addition thereof by the normal addition techniques (Examples 14 through 17).

Example 19

Propylene Polymerization

To an autoclave of 5 litres of capacity, free from air and moisture, equipped with a thermocouple for temperature measurement, and with a magnetic-anchor stirrer, at the temperature of 70°C 2 litres of heptane containing 13 mmol of $AlEt_3$, 3.6 mmol of methyl p-toluate, 200 mg of a catalyst for α-olefin polymerization, obtained as reported in Example 1, 500 N.C.-ml of $H_2$, and propylene are charged, up to the total pressure of 7 bars.

The addition of propylene is continued for 2 hours, with autoclave pressure and temperature being maintained constant.

At the end of the polymerization, 10 g is added of ethyl alcohol, the reaction mixture is then cooled to room temperature, the autoclave is vented and the contents thereof are discharged on a filter. The filtered solid, which weighs 420 g, is then dried in an oven at 0°C, under a residual pressure of 10 $mm_{Hg}$, for 2 hours.

Thus, 310 g is added of a solventless polymer, which has an $MFI_{2.16}$ = 2 g/10 minutes.

Example 20

Polymerization of Polypropylene with the Addition of UV-1 During the /Step of Catalyst Quenching

The reaction is carried out according to as reported in the preceding Example; at the end of the polymerization, 20 ml of ethyl alcohol containing 3 g of UV-1 is added.

After a further (approximately) 30 minutes of stirring, the autoclave is vented and the product (410 g) is recovered as reported in the preceding Example.

After the oven-drying of the product, 310 g thereof is obtained.

Example 21

Addition of UV-1 Product to the Polypropylene Powder Prepared as Reported in Example 19

UV-1 product is added to the polymer prepared as reported in Example 19, by operating as disclosed in Example 14 for LLPDE.

Example 22

The polymers prepared as reported in Examples 19-21 were extruded in order to obtain films from flat die, of 5±5 µl of thickness.

For such extrusion, a laboratory-size extruder of BRABENDER type was used under the following conditions:

-Temperature profile T(°C) = 210-230-240-220

-Rpm = 50

The so-obtained films were submitted to irradiation by U.V. light, using a WOM by ATLAS, with the following modalities:

-Black panel temperature = 55°C

-Relative humidity = 50%

-Full-light cycle.

On the films, the embrittlement time and the time necessary to obtain a residual elongation at break of 50% were determined.

The results are reported in following Table III.

Table III

| Compound of Example No. | Embrittlement Time | Time to 50% of Residual Elongation at Break |
|---|---|---|
| 19 | 70 (hours) | 50 (hours) |
| 20 | 400 (hours) | 350 (hours) |
| 21 | 300 (hours) | 250 (hours) |

## Claims

1. Process for the preparation of thermostabilized polymers or co-polymers of α-olefins, consisting in carrying out the polymerization or co-polymerization in the presence of at least a stabilizer agent selected from the derivatives of tetra-alkyl-morpholine and of tetra-alkyl-pyrrolidine, respectively containing the groups (I) and (II):

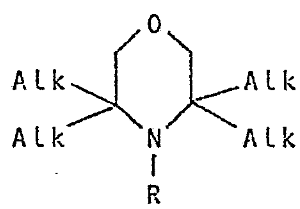

(I)

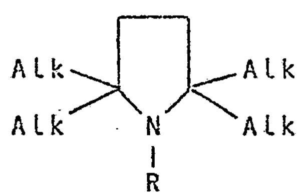

(II)

and the derivatives of tetra-alkyl-piperidine-containing the group (III)

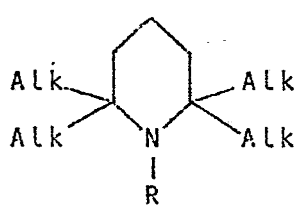

(III)

and substituted in 4-position with a paraffinic polymeric chain, or with a silyl-alkoxy group.

2. Process of claim 1, wherein the stabilizer agent is a derivative of tetra-alkyl-morpholine or of tetra-alkyl-pyrrolidine, respectively containing the groups (I) and (II):

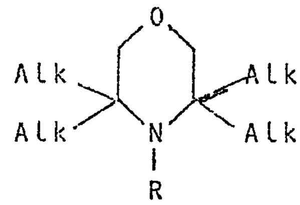

(I)

and

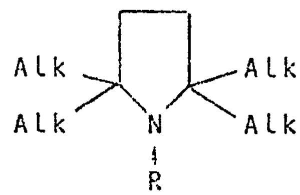

(II)

3. Process of claim 2, wherein the stabilizer agent is selected from the derivatives of tetra-alkyl-pyrrolidine, wherein one or more pyrrolidinic groups are condensed on a possibly substituted aliphatic or heteroaromatic ring.

4. Process of claim 1, wherein the stabilizer agent is selected from the derivatives of tetra-alkyl-piperidine, substituted in 4-position with a paraffinic polymeric chain, or with a silyl-alkoxy group.

5. Process of claim 4, wherein such stabilizer agent is selected from the derivatives of tetra-alkyl-piperidine having the formulae:

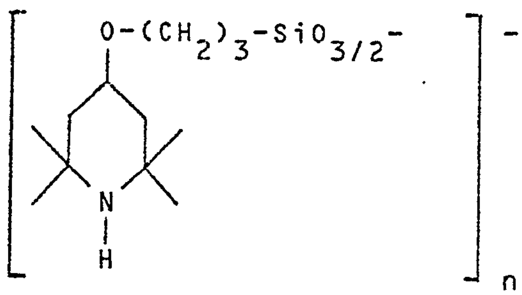

and

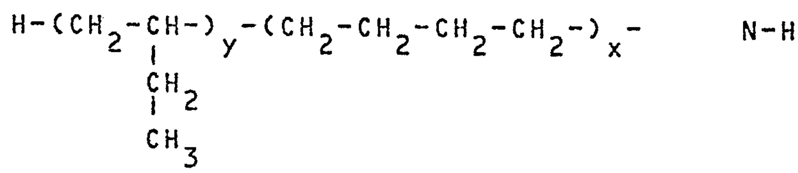

6. Process of claim 1, wherein the stabilizer agent is added during the step of catalyst quenching.

7. Process of claim 1, wherein the polymerization is carried out in the presence of a catalyst of Ziegler-Natta type, or on the basis of metal oxides.

8. Process of claim 7, wherein the catalyst is a catalyst of Ziegler-Natta type.

9.Process of any of the preceding claims, wherein the olefinic monomer which is polymerized or co-polymerized is selected from ethylene, propylene, 1-butene, 4-methyl-1-pentene, 2-methyl-pentene, 1-pentene, 3-methyl-1-butene, 1-hexene, 1-octene, 2-ethyl-1-hexene, and styrene.

10. Process of claim 9, wherein the monomer is selected from ethylene and propylene.

11. Process of any of the preceding claims, wherein the polymerization is carried out in the presence of an inert solvent.

12. Process of any of the preceding claims, wherein the stabilizer agent is used in such an amount that the so-obtained polymer contains a percentage thereof, by weight, comprised within the range of from 0.005 to 1%.

13. Process of claim 12, wherein such percentage is comprised within the range of from 0.01 to 0.5.

14. Stabilized polyolefin obtained by means of the process of any of the preceding claims.

European Patent Office

# EUROPEAN SEARCH REPORT

Application number

EP 87 20 1440

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| P,X | EP-A-0 192 987 (HIMONT)<br>* Claims 1-9 * | 1,4-14 | C 08 F 2/44<br>C 08 F 10/00<br>C 08 F 4/60 |
| X | RESEARCH DISCLOSURE, no. 112, August 1973, pages 85-91, no. 11252; CIBA-GEIGY: "Combinations of stabilisers for polyolefins"<br>* Page 90, right-hand column, paragraph 3 * | 1 | |
| A | US-A-4 304 684 (EXXON)<br>* Claims 1,5-7,10,11 * | 1-14 | |
| D,A | EP-A-0 155 055 (ENICHEM)<br>* Claims * | 1 | |
| | | | TECHNICAL FIELDS SEARCHED (Int. Cl.4) |
| | | | C 08 F |

The present search report has been drawn up for all claims

| Place of search | Date of completion of the search | Examiner |
|---|---|---|
| THE HAGUE | 11-11-1987 | DE ROECK R.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82